# EUROPÄISCHE PATENTSCHRIFT

(11) **EP 2 021 887 B1**
(45) Veröffentlichungstag und Bekanntmachung des Hinweises auf die Patenterteilung: **18.08.2010**
(21) Anmeldenummer: 07728569.0
(22) Anmeldetag: 26.04.2007
(51) Int. Cl.: G05B 19/18, G05B 19/408, G05B 19/4099, G05B 19/41, G05B 19/42, B24B 53/00, B24B 49/00, B24B 21/16

(54) **VERFAHREN ZUM STEUERN EINER SCHLEIFMASCHINE UND NUMERISCH GESTEUERTE SCHLEIFMASCHINE**
NUMERICALLY CONTROLLED GRINDING MACHINE AND PROCESS FOR CONTROLLING SAME
PROCEDE POUR COMMANDER UNE MEULEUSE A COMMANDE NUMERIQUE

(30) Priorität: 16.05.2006 DE 102006022831
(43) Veröffentlichungstag der Anmeldung: 11.02.2009
(73) Patentinhaber: SIEMENS AKTIENGESELLSCHAFT, 80333 München (DE)
(72) Erfinder: BAUER, Peter, 91074 Herzogenaurach (DE); UHLICH, Andreas, 90530 Wendelstein (DE)
(86) Internationale Anmeldenummer: PCT/EP2007/054114
(87) Internationale Veröffentlichungsnummer: WO 2007/131869

(56) Entgegenhaltungen:
- EP-A- 1 384 553
- US-A- 4 588 872
- US-A- 4 719 578
- US-A- 5 193 314

## Beschreibung

Die Erfindung betrifft ein Verfahren zum Steuern einer (numerisch gesteuerten) Schleifmaschine, insbesondere einer Rundschleifmaschine mit zwei Linearachsen und zumindest zwei weiteren von Linearachsen verschiedenen Achsen, bei der Bearbeitung eines Werkstücks. Sie betrifft auch eine numerisch gesteuerte Schleifmaschine, an der das Verfahren durchführbar ist.

Aus dem US-Patent 4,588,872 ist eine Schweißmaschine bekannt, die anhand einer Ist-Konturlinie, an der zwei zusammenzuschweißende Teile einander berühren, den Ort für eine Schweißnaht festlegt. Entlang der Ist-Konturlinie wird dabei ein Messfühler verfahren, der an einen Schweißbrenner gekoppelt ist. Der Messfühler misst vorab die Ist-Kontur. Gelangt der Schweißbrenner zu der vermessenen Stelle, kann er optimal relativ zur Ist-Kontur eingestellt werden.

Aus dem Gebiet der Fräsmaschinen ist bekannt, dass eine numerische Steuerung Daten betreffend die Solloberflächenkontur eines zu bearbeitenden Werkstücks erhält und diese in Steuerbefehle für Antriebseinheiten umsetzt, die den Maschinenachsen zugeordnet sind. Dies ist bei Fräsmaschinen deswegen einfach, weil diese üblicherweise drei Linearachsen aufweisen, die senkrecht aufeinander stehen, so dass die kartesischen Koordinaten der Solloberflächenkontur direkt in Steuerbefehle umgewandelt werden.

Diese einfache Möglichkeit ist bei Schleifmaschinen der eingangs genannten Art nicht gegeben. Durch die Verwendung zumindest einer von einer Linearachse verschiedenen Achse zusätzlich zu zwei Linearachsen können die kartesischen Koordinaten einer Solloberflächenkontur des Werkstücks zur Erzeugung von Steuerbefehlen für Achsantriebseinheiten nicht ohne weiteres verwendet werden. So ist es im Stand der Technik üblich, offline, d.h. vor der Bearbeitung des Werkstücks und außerhalb der eigentlichen Schleifmaschine bzw. deren Datenverarbeitungseinrichtung die Steuerbefehle zu erzeugen, z.B. unter Zuhilfenahme eines CAD-Systems (CAD bedeutet Computer Aided Design, computerunterstütztes Entwerfen). Durch das Vorabberechnen der Achssteuerbefehle geht viel Flexibilität verloren. Es entstehen auch Schwierigkeiten bei der Anpassung des Vorschubs an den Achsen (Geschwindigkeit der Achsen). Dieser muss den Programmanweisungen angepasst und definiert werden. Das Vorabberechnen der Achssteuerbefehle bedingt auch, dass sich Beschränkungen im Hinblick auf den Datenumfang ergeben. So ist es im Stand der Technik schwer möglich, so genannte Interpolationsbewegungen durchzuführen, d.h. solche Bewegungen, bei denen mehrere Achsen koordiniert derart Bewegungen ausführen, dass das Werkzeug eine vorbestimmte Konturlinie an dem Werkstück entlang fährt. Um solche Konturlinien, die gerade Linien oder gekrümmte Linien sein können, wenigstens annäherungsweise definieren zu können, werden die Konturlinien in Teilstrecken eingeteilt und die Achsen werden jeweils so angesteuert, dass das Werkzeug sich vom Anfangspunkt der Teilstrecke zum Endpunkt der Teilstrecke bewegt, wobei der vom Anfangspunkt zum Endpunkt führende Weg nicht genau eingestellt werden kann. Eine Verbesserung bei der Definition der Konturen würde bei dem Vorgehen gemäß dem Stand der Technik eine Erhöhung der Datenmenge mit sich bringen.

Die mangelnde Flexibilität der Vorgehensweise ergibt sich auch daraus, dass die Berechnungen nicht auf einem maschinenunabhängigen Modell beruhen, sondern dass die maschinenspezifischen Eigenschaften der anzusteuernden Schleifmaschine mit einprogrammiert werden müssen.

Es ist Aufgabe der Erfindung für Schleifmaschinen, insbesondere Rundschleifmaschinen, die Möglichkeit bereitzustellen, präziser als bisher Solloberflächenkonturen von Werkstücken zu erzeugen, indem präzisere Achssteuerbefehle bereitgestellt werden.

Die Aufgabe wird gelöst durch ein Verfahren gemäß Patentanspruch 1.

Das erfindungsgemäße Verfahren umfasst die Schritte:
- Erzeugen einer Solloberflächenkontur des Werkstücks mit Hilfe eines Teileprogramms,
- Ableiten von Vektoren mit fünf Bestimmungsgrößen aus der Solloberflächenkontur, von denen drei Bestimmungsgrößen Positionen der Solloberfläche in einem kartesischen Koordinatensystem entsprechen und zwei Bestimmungsgrößen eine Orientierungsrichtung der Solloberfläche im Hinblick auf eine Orientierung der Schleifscheibe der Schleifmaschine (14) entsprechen,
- Zuführen der Vektoren zu einer Datenverarbeitungseinrichtung in der Schleifmaschine,
- Berechnen von Achssteuerbefehlen für den Achsen zugeordnete Achsantriebseinheiten der Schleifmaschine aus den Vektoren aufgrund eines Transformationsmodells in der Datenverarbeitungseinrichtung in Echtzeit, wobei aus den drei Bestimmungsgrößen, die Positionen der Solloberfläche im kartesischen Koordinatensystem entsprechen, Achssteuerbefehle für die zwei Linearachsen und die Rundachse abgeleitet werden, und aus den zwei Bestimmungsgrößen, die der Orientierungsrichtung der Solloberfläche entsprechen, Achssteuerbefehle für die weitere Rundachse und die Schwenkachse abgeleitet werden, bei sofortigem
- Zuführen der Achssteuerbefehle zu den Achsantriebseinheiten und Umsetzen der Achssteuerbefehle durch die Achsantriebseinheiten.

Die Erfindung beruht darauf, dass die Achssteuerbefehle nicht mehr vorab in einem externen CAD-System erzeugt werden, sondern in der numerisch gesteuerten Schleifmaschine selbst. Sie beruht auch darauf, dass diese Berechnungen in Echtzeit erfolgen. Durch diese Merkmale ist sichergestellt, dass nicht mehr große Datenmengen wie im Stand der Technik anfallen. So ist es auch möglich, mit Hilfe des erfindungsgemäßen Verfahrens genaue Konturlinien entlang des Werkstücks zu fahren. Wegen der Echtzeitberechnung der Steuerbefehle kann praktisch jedem Koordinatenpunkt auf dem Werkstück in der durch die Achsantriebseinheiten ermöglichten Genauigkeit (Granularität) ein Achssteuerbefehl zugeordnet werden, so dass die zu fahrenden Konturlinien nicht mehr in Teilstrecken unterteilt werden müssen.

Ermöglicht wird das Online-Berechnen (Echtzeit-Berechnen) der Achssteuerbefehle durch die Verwendung eines Transformationsmodells. Dieses bringt auch den Vorteil größerer Flexibilität insgesamt mit sich. Das Transformationsmodell kann unabhängig von Details der Maschine verwendet werden und muss nur jeweils maschinenspezifisch parametriert werden. Es ist somit möglich, für die Datenverarbeitungseinrichtung in der Schleifmaschine eine aufzusetzende Software bereitzustellen, die das Transformationsmodell enthält.

Auch kurzfristig auftretende Änderungen der Kinematikparameter bzw. der Kinematik selbst können bei der Berechnung kurzfristig kompensiert werden.

In dem kartesischen Koordinatensystem, das in der Regel das Werkstückkoordinatensystem sein wird, sind Verschiebungen und Drehungen möglich. Kann das Werkstück nicht in der Sollposition eingespannt werden, ist lediglich eine Messung der Verschiebung oder Drehung notwendig, und es kann eine Korrektur bei der Berechnung der Achssteuerbefehle erfolgen. Derartiges ist bei der Vorabberechnung offline im Stand der Technik nicht möglich. Es kann bei der Erfindung auch flexibel eine Korrektur erfolgen, was die Form des Werkzeugs betrifft. Beispielsweise kann eine Abnutzung der Schleifscheibe gemessen werden und bei der Onlineberechnung berücksichtigt werden. Durch die Onlineberechnung mit Hilfe des Transformationsmodells sind die Achssteuerbefehle genau an die Kontur an den kartesischen Koordinatenpunkten angepasst, für die jeweils die Achssteuerbefehle berechnet werden. Somit gibt es keine Probleme mehr bei der Definition der Geschwindigkeit (Vorschub) bei der Achsbewegung. Vielmehr ist sie gleich der "Konturgeschwindigkeit" beim Entlangfahren an der Werkstückgeometrie. Durch die Erfindung werden auch kompliziertere Bewegungen ermöglicht, insbesondere überlagerte Bewegungen der unterschiedlichen Achsen. Ein Beispiel hierfür ist ein Pendeln des Werkzeugs entlang der Berührlinie mit dem Werkstück.

Die Informationen aus dem Vektor zerfallen wie folgt: Aus den drei Bestimmungsgrößen, die Positionen der Solloberfläche im kartesischen Koordinatensystem entsprechen, werden Steuerbefehle für die zwei Linearachsen und eine Rundachse der Schleifmaschine abgeleitet. Aus den zwei Bestimmungsgrößen, die der Orientierungsrichtung der Solloberfläche entsprechen und daher ohnehin schon vorbereitend für die Steuerbefehle berechnet sind, können Steuerbefehle für die Ansteuerung der Schleifscheibe errechnet werden. Üblicherweise sind dies Steuerbefehle für eine weitere Rundachse und eine Schwenkachse.

Die erfindungsgemäße numerisch gesteuerte Schleifmaschine mit zwei Linearachsen, zumindest zwei von Linearachsen verschiedenen Achsen, mit den Achsen zugeordneten Achsenantriebseinheiten sowie mit einer Datenverarbeitungseinrichtung ist **dadurch gekennzeichnet, dass** die Datenverarbeitungseinrichtung dazu ausgelegt ist, aus ihr zugeführten Vektorinformationen über die Solloberflächenkontur eines Werkstücks in Echtzeit Achssteuerbefehle für Achsantriebseinheiten zu generieren und an die Achsantriebseinheiten abzugeben.

Bevorzugt geschieht das Auslegen der Datenverarbeitungseinrichtung für den genannten Zweck durch Bereitstellen eines Computerprogramms. Hat die numerisch gesteuerte Schleifmaschine zwei Linearachsen, zwei Rundachsen und eine Schwenkachse, so können Vektoren mit fünf Bestimmungsgrößen aufgrund eines Transformationsmodells in Soll-Achsbewegungen für die fünf Achsen transformiert werden. Aus den Soll-Achsbewegungen können dann leicht die Achssteuerbefehle abgeleitet werden.

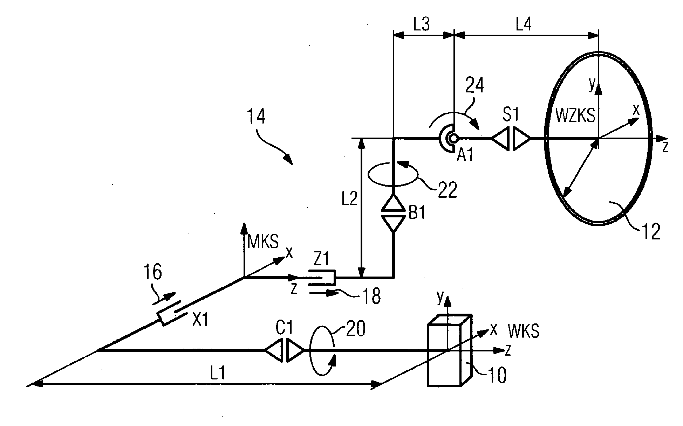

Die nachfolgende Beschreibung enthält weitere Details zur Erfindung. Sie wird unter Bezug auf die Zeichnung gegeben, wobei die Figur schematisch das Transformationsmodell, das bei einer bevorzugten Ausführungsform der Erfindung verwendet wird, erläutert.

Vorliegend geht es um die Bearbeitung eines Werkstücks 10 mit Hilfe eines Werkzeugs, genauer gesagt einer Schleifscheibe 12 in einer im Ganzen mit 14 bezeichneten Rundschleifmaschine. Das Werkstück hat das mit WKS bezeichnete Werkstückkoordinatensystem. Die Rundschleifmaschine hat das mit MKS bezeichnete Maschinenkoordinatensystem, und der Schleifscheibe 12 kann das werkzeugkoordinatensystem WZKS zugeordnet werden.

Die Maschine umfasst folgende Bewegungsmöglichkeiten: Eine Linearachse X1 stellt die Möglichkeit zur Bewegung entlang der x-Achse des Maschinenkoordinatensystems MKS bereit, siehe Pfeil 16. Eine Linearachse Z1 stellt die Möglichkeit zur Bewegung längs der z-Achse des Maschinenkoordinatensystems MKS bereit, siehe Pfeil 18. Eine Rundachse C1 stellt die Möglichkeit zur Drehung entsprechend dem Pfeil 20 um die z-Achse bereit. Die Schleifscheibe 12 ist an einem Aufbau befestigt, der eine Drehung vermittels der Rundachse B1 entsprechend dem Pfeil 22 und ein Schwenken entsprechend dem Pfeil 24 an einer Schwenkachse A1 ermöglicht. Die eigentliche Drehung der Schleifscheibe erfolgt vermittels der Rundachse S1. In der Figur sind die Längen L1 bis L4 eingezeichnet, welche bei der Berechnung im Rahmen des Modells einbezogen werden.

Mit Hilfe eines Teileprogramms wird eine Solloberflächenkontur des Werkstücks 10 entworfen. Aus dieser Solloberflächenkontur können nun Vektoren mit fünf Bestimmungsgrößen abgeleitet werden. Die Vektoren entsprechen einzelnen Punkten auf der Solloberfläche. Die ersten drei Bestimmungsgrößen sind die Koordinaten des Punkts im Werkstückkoordinatensystem WKS entsprechend der x-Achse, der y-Achse und z-Achse. Da bei der Erzeugung der Solloberflächenkontur mit Hilfe des Teileprogramms auch die Eigenschaften des Werkzeugs, vorliegend der Schleifscheibe 12 berücksichtigt werden, können zwei weitere Freiheitsgrade der Solloberflächenkontur definiert werden, welche später den Achsen B1 und A1 zugeordnet werden können. Dies bezeichnet die vorliegende Anmeldung mit dem Begriff "Orientierungsrichtung". Die beiden Freiheitsgrade berücksichtigen die Nachbarumgebung des Punkts auf der Solloberfläche, um zu definieren, wie die Bearbeitung des Punkts mit Hilfe der Schleifscheibe 12 erfolgen soll. Mathematisch gesehen kann es sich bei den zwei Bestimmungsgrößen um zwei Werte der Richtungsableitung der Kontur der Oberfläche des Werkstücks in zwei Dimensionen der Oberfläche handeln.

Aus den drei ersten Bestimmungsgrößen des Vektors können die Bewegungen der Achsen X1, Z1 und C1 ermittelt werden. Deckt sich die z-Achse des Werkstückkoordinatensystems WKS mit der z-Achse des Maschinenkoordinatensystems MKS, so kann die z-Koordinate direkt in eine Bewegung entsprechend dem Pfeil 18 transformiert werden. In die Berechnung der Bewegung längs der x-Achse geht wegen der Drehung entsprechend dem Pfeil 20 durch die Grundachse C1 auch die y-Koordinate ein. Im Falle, dass sich die Koordinatensysteme MKS und WKS nicht decken, gehen jeweils alle drei Koordinaten in die Bewegung aller drei Achsen X1, Z1 und C1 ein. Die beiden Bestimmungsgrößen betreffend die Orientierungsrichtung der Solloberfläche in dem Vektor können direkt in Steuerbefehle für die Rundachse B1 und die Schwenkachse A1 übertragen werden. Das Zerfallen des Vektors in zwei Teile, die ersten drei Komponenten, die den Achsen X1, Z1 und C1 einerseits und in die zweiten Komponenten, die den Achsen B1 und A1 zugeordnet sind, stellt naturgemäß den Idealfall dar. Da die Vektorenkomponenten, also die fünf Bestimmungsgrößen der Vektoren, fünf verschiedenen Freiheitsgraden entsprechen, ist grundsätzlich auch eine Berechnung der Achsbewegungen der genannten fünf Achsen jeweils aus allen fünf Komponenten möglich, wenn dieser Idealfall aufgrund des Verhältnisses der Koordinatensysteme MKS und WKS zueinander oder der genauen Definition der Vektoren nicht gegeben sein sollte.

## Patentansprüche

1. Verfahren zum Steuern einer Schleifmaschine (14) mit zwei Linearachsen (X1, Z1), einer Rundachse (C1), einer weiteren Rundachse (B1) und einer Schwenkachse (A1) bei der Bearbeitung eines Werkstücks (10), mit den Schritten:
- Erzeugen einer Solloberflächenkontur des Werkstücks (10) mit Hilfe eines Teileprogramms,
- Ableiten von Vektoren mit fünf Bestimmungsgrößen aus der Solloberflächenkontur, von denen drei Bestimmungsgrößen Positionen der Solloberfläche in einem kartesischen Koordinatensystem entsprechen und zwei Bestimmungsgrößen eine Orientierungsrichtung der Solloberfläche im Hinblick auf eine Orientierung der Schleifscheibe (12) der Schleifmaschine (14) entsprechen,
- Zuführen der Vektoren zu einer Datenverarbeitungseinrichtung in der Schleifmaschine (14),
**gekennzeichnet durch**
- Berechnen von Achssteuerbefehlen für den Achsen zugeordnete Achsantriebseinheiten der Schleifmaschine (14) aus den Vektoren aufgrund eines Transformationsmodells in der Datenverarbeitungseinrichtung in Echtzeit, wobei aus den drei Bestimmungsgrößen, die Positionen der Solloberfläche im kartesischen Koordinatensystem entsprechen, Achssteuerbefehle für die zwei Linearachsen (X1,Z1) und die Rundachse (C1) abgeleitet werden, und aus den zwei Bestimmungsgrößen, die der Orientierungsrichtung der Solloberfläche entsprechen, Achssteuerbefehle für die weitere Rundachse (B1) und die Schwenkachse (A1) abgeleitet werden, bei sofortigem
- Zuführen der Achssteuerbefehle zu den Achsantriebseinheiten und Umsetzen der Achssteuerbefehle **durch** die Achsantriebseinheiten.

## Claims

1. Method for controlling a grinding machine (14), having two linear axes (X1, Z1), a round axis (C1), a further round axis (B1) and a pivot axis (A1), during the machining of a workpiece (10), comprising the steps of:
- producing a desired surface contour of the workpiece (10) with the aid of a subprogram,
- deriving vectors with five defining quantities from the desired surface contour, of which three defining quantities correspond to positions of the desired surface in a Cartesian coordinate system and two defining quantities correspond to an orientation direction of the desired surface with regard to an orientation of the grinding wheel (12) of the grinding machine (14),
- feeding the vectors to a data processing device in the grinding machine (14),
**characterized by**
- calculating axis control commands for axis drive units of the grinding machine (14), assigned to the axes, from the vectors on the basis of a transformation model in the data processing device, doing so in real time, by using the three defining quantities corresponding to positions of the desired surface in the Cartesian coordinate system to derive axis control commands for the two linear axes (X1, Z1) and the round axis (C1), and by using the two defining quantities corresponding to the orientation direction of the desired surface to derive axis control commands for the further round axis (B1) and the pivot axis (A1), while immediately
- feeding the axis control commands to the axis drive units and implementing the axis control commands by means of the axis drive units.

## Revendications

1. Procédé de commande d'une meuleuse ( 14 ) ayant deux axes ( X1, Z1) linéaires, un axe ( C1 ) circulaire, un autre axe ( B1 ) circulaire et un axe ( A1 ) de pivotement lors de l'usinage d'une pièce ( 10 ), comprenant les stades dans lesquels :
- on produit un contour de surface de consigne de la pièce ( 10 ) à l'aide d'un programme partiel,
- on déduit des vecteurs ayant cinq grandeurs de détermination à partir du contour de la surface de consigne, parmi lesquelles trois grandeurs de détermination correspondent à des positions de la surface de consigne dans un système de coordonnées cartésien et deux grandeurs de détermination correspondent à une direction d'orientation de la surface de consigne en considération d'une orientation du disque ( 12 ) abrasif de la meuleuse ( 14 ),
- on envoie les vecteurs à un dispositif informatique dans la meuleuse ( 14 ),
**caractérisé en ce que**
- on calcule des instructions de commande d'axe pour les unités d'entraînement d'axe de la meuleuse ( 14 ) associées aux axes à partir des vecteurs sur la base d'un modèle de transformation, dans le dispositif informatique en temps réel, en déduisant, des trois grandeurs de détermination qui correspondent aux positions de la surface de consigne dans le système de coordonnées cartésien, des instructions de commande d'axe pour les deux axes ( X1, Z1 ) linéaires et l'axe ( C1 ) circulaire et, à partir des deux grandeurs de détermination qui correspondent à la direction d'orientation de la surface de consigne, des instructions de commande d'axe pour l'autre axe ( B1 ) circulaire et l'axe ( A1 ) de pivotement,
- en envoyant immédiatement les instructions de commande d'axe aux unités d'entraînement d'axe et en transformant les instructions de commande d'axe par les unités d'entraînement d'axe.
